Europäisches Patentamt

European Patent Office

Office européen des brevets

(11) Veröffentlichungsnummer: **0 492 087 B1**

## EUROPÄISCHE PATENTSCHRIFT

(45) Veröffentlichungstag der Patentschrift: **18.01.95**

(21) Anmeldenummer: **91118600.5**

(22) Anmeldetag: **31.10.91**

(51) Int. Cl.6: **C09D 125/14**, C09D 133/06, B41M 3/18, D21H 13/16, D21H 19/66

(54) **Beschichtungszusammensetzung für Tapeten und daraus hergestellte Tapeten.**

(30) Priorität: **04.12.90 DE 4038556**

(43) Veröffentlichungstag der Anmeldung:
**01.07.92 Patentblatt 92/27**

(45) Bekanntmachung des Hinweises auf die
Patenterteilung:
**18.01.95 Patentblatt 95/03**

(84) Benannte Vertragsstaaten:
**AT BE CH DE DK ES FR GB GR IT LI LU NL SE**

(56) Entgegenhaltungen:
**DE-B- 2 614 190**
**US-A- 4 782 109**

(73) Patentinhaber: **OPTIPLAST Gesellschaft für Kunststoffspezialbeschichtungen mbH Goldberger Weg 46 D-42699 Solingen (DE)**

(72) Erfinder: **Depluet, Willy, Dipl.-Ing. Oberrather Strasse 54 W-4000 Düsseldorf 30 (DE)**
Erfinder: **Jülich, Günter An der Vorburg 14 W-4234 Alpen (DE)**

**Beschreibung**

Der Gegenstand der Erfindung betrifft eine Beschichtungszusammensetzung auf der Basis wäßriger, weichmacherfreier Kunststoffdispersionen für die Herstellung von Tapeten und daraus hergestellte Tapeten, insbesondere von Profiltapeten, die aus einer Trägerbahn aus Papier, Kunststoffolie oder Vlies sowie aus einer auf der Oberfläche der Trägerbahn angeordneten und mit dieser verbundenen Beschichtung aus einem Kunststoff besteht.

Übliche Tapeten mit einer Kunststoffprofilbeschichtung weisen einen hohen Anteil an Polyvinylchlorid (40 bis 50 %) sowie einen hohen Weichmacheranteil (≈ 30 %) auf. So ist beispielsweise aus der DE-OS 28 08 733 ein Verfahren zur Herstellung eines Flächengebildes mit strukturierter Oberfläche, das u. a. als dekorative Wandbekleidung für Wände geeignet ist, bekannt. Wie den Beispielen dieser Literaturstelle entnommen werden kann, enthält die Beschichtungsmasse für die aus einer Papierträgerbahn bestehende Trägerbahn als Hauptbestandteil bevorzugt ein weichmacherhaltiges Polyvinylchloridplastisol (59 % Polyvinylchlorid und 32 % Weichmacher im Beispiel 1), das zusätzlich Treibmittel, Füllstoffe und Stabilisatoren enthält. Diese bekannten Tapeten bzw. Profiltapeten erfüllen zwar die gesetzten Erwartungen, insbesondere hinsichtlich Haftung auf der Trägerbahn, jedoch stört im Zuge der Umweltdiskussion der hohe Gehalt an Polyvinylchlorid und Weichmacher. Bei der Herstellung von Polyvinylchlorid enthaltenden Profiltapeten ist eine technische Nachverbrennung erforderlich. Eine biologische Abbaubarkeit der genannten Polyvinylchlorid enthaltenden Tapeten und Profiltapeten ist nicht bzw. schwer möglich.

Zwar können gemäß den Angaben in der Beschreibung der DE-OS 28 08 733 anstelle der bevorzugt angewandten Polyvinylchloriddispersionen auch Polyacrylat- bzw. Polymethacrylatdispersionen in Beschichtungsmassen bei der Herstellung von Profiltapeten eingesetzt werden. Es hat sich indessen in der Praxis gezeigt, daß insbesondere geschäumte Beschichtungsmassen aus diesem Kunststoff eine mangelnde Haftung auf der Trägerbahn zeigen und zudem nicht mit einer Anstrichmitteldispersion überstrichen werden können, wenn die erzielten Schaumstrukturen auf der Basis expandierbarer Mikrohohlkörper aufgebaut sind.

Der Erfindung liegt die Aufgabe zugrunde, eine Beschichtszusammensetzung auf der Basis wäßriger Kunststoffdispersionen für die Herstellung von Tapeten, insbesondere Profiltapeten, zur Verfügung zu stellen, die frei von Polyvinylchlorid, anderen halogenierten Produkten und Weichmachern ist, die gut auf der Trägerbahn haftet, nach der Trocknung üblichen mechanischen Belastungen widerstehen und mit handelsüblichen Dispersionsfarben überstrichen werden kann. Darüber hinaus sollte sie eine hohe Elastizität, Rückstellvermögen sowie nur eine geringe Wasserquellbarkeit aufweisen und spezifisch leicht sein. Auf die Mitverwendung von Treibmitteln sollte verzichtet werden. Darüber hinaus sollten Tapeten mit der erfindungsgemäßen Beschichtungszusammensetzung ohne Nachverbrennung produziert werden können und biologisch abbaubar sein.

Zur Lösung der Aufgabe ist die eingangs beschriebene Beschichtungszusammensetzung dadurch gekennzeichnet, daß sie aus (a) 10 - 50 Gew.-%, vorzugsweise 20 - 30 Gew.-%, einer Acrylsäureesterdispersion (berechnet als 50 %ige Dispersion), (b) 5 - 25 Gew.-%, vorzugsweise 10 - 20 Gew.-%, einer Styrol-Acrylsäureester-Copolymerisatdispersion (berechnet als 50 %ige Dispersion), (c) bis zu 10 Gew.-%, vorzugsweise bis zu 5 Gew.-% Wasser, (d) 5 - 15 Gew.-%, vorzugsweise 6 - 10 Gew.-% eines natürlichen und/oder gefällten Calciumcarbonates, (e) 7 - 15 Gew.-%, vorzugsweise 9 - 12 Gew.-% Kieselgur, (f) 5 - 15 Gew.-%, vorzugsweise 8 - 12 Gew.-% eines gemahlenen Talkums, (g) 5 - 10 Gew.-%, vorzugsweise 6 - 8 Gew.-% eines Titandioxydpigments, (h) weniger als 3 Gew.-%, vorzugsweise weniger als 1 Gew.-% organischem Lösungsmittel sowie Rest aus Verarbeitungshilfsmitteln, Konservierungsmitteln, Farbpigmenten, Farbstoffen und/oder Verdickungsmitteln, wobei das Gesamtgewicht auf 100 Gew.-% ergänzt wird, und (i) 2 bis 6 Gew.-%, vorzugsweise 3 Gew.-%, bezogen auf das Gesamtgewicht der Beschichtung, Glashohlkugeln und/oder Kunststoffhohlkörper mit einem mittleren Teilchendurchmesser von 10 bis 150 μm, vorzugsweise 15 bis 80 μm, und/oder Kunststoffmikrohohlkugeln und/oder gefüllten Kunststoffhohlkörpern besteht oder diese Bestandteile enthält. (Dabei sind die vorgenannten Angaben in Gew.-% zu (a) bis (i) auch als Gew.-Teile einsetzbar.)

Gemäß einer besonderen Ausführungsform enthält die Beschichtungszusammensetzung 1 bis 3 Gew.-%, vorzugsweise 2 Gew.-% Holzfasern und/oder Kunststoffasern.

Die auf einer Trägerbahn aufgebrachte Beschichtungszusammensetzung enthält im trockenen oder wasserfreien Zustand somit (a) 5 bis 25 Gew.-Teile, vorzugsweise 10 bis 15 Gew.-Teile eines Acrylsäureesters oder eines Acrylsäureestercopolymerisates mit einem Comonomeranteil unter 20 Gew.-%, vorzugsweise unter 10 Gew.-%, oder eines Styrol-Acrylsäureester-Copolymerisates mit einem geringen Styrol- bzw. Polystyrol-Gehalt, (b) 2,5 bis 12,5 Gew.-Teile, vorzugsweise 5 bis 10 Gew.-Teile eines Styrol-Acrylsäureester-Copolymerisates (mit einem gegenüber (a) höheren Styrol- oder Polystyrol-Gehalt), (c) 5 bis 15 Gew.-Teile, vorzugsweise 6 bis 10 Gew.-Teile eines natürlichen und/oder gefällten Calciumcarbonats, (d) 7 bis 15 Gew.-Teile, vorzugsweise 9 bis 12 Gew.-Teile Kieselgur, (e) 5 bis 15 Gew.-Teile, vorzugsweise 8 bis 12 Gew.-Teile eines gemahlenen Talkums, (f) 5 bis 10 Gew.-Teile, vorzugsweise 6 bis 8 Gew.-Teile eines Titandioxidpigments, (g) 2 bis 6 Gew.-Teile, vorzugsweise 3 Gew.-Teile, bezogen auf das Gesamtgewicht der Beschichtung, Glashohlkugeln und/oder Kunststoffhohlkugeln mit einem mittleren Teilchendurchmesser von 10 bis 150 $\mu$m, vorzugsweise 15 bis 80 $\mu$m, und/oder gefüllte Kunststoffmikrohohlkugeln und/oder gefüllte Kunststoffhohlkörper und 1 bis 3 Gew.-Teile Holzfasern und/oder Kunststoffasern, sowie gegebenenfalls Verarbeitungshilfsmitteln, Konservierungsmitteln, Farbpigmenten, Farbstoffen und/oder Verdikkungsmitteln sowie gegebenenfalls noch Restanteile von Wasser oder Verdünnungsmittel.

Vorteilhaft betragen die aufgebrachte Gewichtsmenge der Beschichtungszusammensetzung 30 bis 300 g/cm³ (Trockengewicht) und/oder die Dichte der Beschichtungszusammensetung 0,8 bis 1,4 g/cm³ (bezogen auf die nicht getrocknete Beschichtungszusammensetzung).

Nach einer bevorzugten Ausführungsform der Beschichtungszusammensetzung ist die Acrylsäureesterdispersion (a) zu 15 bis 100 Gew.-% (bezogen auf 100 Gew.-Teile Acrylsäureesterdispersion) durch die gleiche Gewichtsmenge einer Acrylsäureestercopolymerisatdispersion (berechnet als 50 %-ige Dispersion) mit einem Comonomeranteil unter 20 Gew.-%, vorzugsweise unter 10 Gew.%, vorzugsweise durch eine Styrol-Acrylsäureester-Copolymerisat-Dispersion mit einem geringen Styrol- bzw. Polystyrol-Gehalt und/oder durch eine Acrylsäureester-Copolymerisationsdispersion a) deren minimale Filmbildungstemperaturen (MFT) um mehr als 6 °C, vorzugsweise mehr als 10 °C unter der minimalen Filmbildungstemperatur von (b) liegt, ersetzt.

Die Erfindung betrifft weiterhin Tapeten, insbesondere Profiltapeten, die aus einer Trägerbahn aus Papier, Kunststoffolie oder Vlies sowie aus einer auf der Oberfläche der Trägerbahn angeordneten und mit dieser verbundenen Beschichtung aus Kunststoff bestehen, wobei die Beschichtungszusammensetzung (a) 5 bis 25 Gew.-Teile, vorzugsweise 10 bis 15 Gew.-Teile eines Acrylsäureesters oder eines Acrylsäureestercopolymerisates mit einem Comonomeranteil unter 20 Gew.-%, vorzugsweise unter 10 Gew.-%, oder eines Styrol-Acrylsäureester-Copolymerisates mit einem geringen Styrol- bzw. Polystyrol-Gehalt, (b) 2,5 bis 12,5 Gew.-Teile, vorzugsweise 5 bis 10 Gew.-Teile eines Styrol-Acrylsäureester-Copolymerisates (mit einem gegenüber (a) höheren Styrol- oder Polystyrol-Gehalt), (c) 5 bis 15 Gew.-Teile, vorzugsweise 6 bis 10 Gew.-Teile eines natürlichen und/oder gefällten Calciumcarbonats, (d) 7 bis 15 Gew.-Teile, vorzugsweise 9 bis 12 Gew.-Teile Kieselgur, (e) 5 bis 15 Gew.-Teile, vorzugsweise 8 bis 12 Gew.-Teile eines gemahlenen Talkums, (f) 5 bis 10 Gew.-Teile, vorzugsweise 6 bis 8 Gew.-Teile eines Titandioxidpigments, (g) 2 bis 6 Gew.-Teile, vorzugsweise 3 Gew.-Teile, bezogen auf das Gesamtgewicht der Beschichtung, Glashohlkugeln und/oder Kunststoffhohlkugeln. mit einem mittleren Teilchendurchmesser von 10 bis 150 $\mu$m und/oder Kunststoffmikrohohlkugeln und/oder gefüllte Kunststoffhohlkörper, sowie gegebenenfalls Verarbeitungshilfsmitteln, Konservierungsmitteln, Farbpigmenten, Farbstoffen und/oder Verdickungsmitteln enthält oder daraus besteht.

Die erfindungsgemäße Beschichtungszusammensetzung findet besonders vorteilhaft Anwendung bei der Herstellung von Tapeten im Rotationssiebdruck-, Rotationstiefdruckverfahren, Quetschdruckverfahren oder Leimdruckverfahren mit Profilstruktur.

Die mit Hilfe der erfindungsgemäßen Beschichtungszusamensetzung hergestellten Profiltapeten sind frei von Polyvinylchlorid, Weichmachern, aromatischen Kohlenwasserstoffen, toxischen Schwermetallen, chlorierten Kohlenwasserstoffen und Fluorchlorkohlenwasserstoffen. Daher sind bei der Herstellung dieser Tapeten keine Nachverbrennungs- oder Kondensationsanlagen zur Einhaltung der TA-Luft erforderlich. Die so hergestellten Profiltapeten sind mit handelsüblichen Dispersionsfarben mehrfach überstreichbar. Bei der Entsorgung der Alttapeten fallen nur leicht biologisch abbaubare Stoffe an. Bei guter Porenverteilung und/oder bei entsprechendem Porenvolumen weist die Beschichtung eine gute Stabilität selbst bei schaumähnlichen Strukturen auf.

Die vorliegende Erfindung betrifft weiterhin ein Verfahren zur Herstellung von Tapeten oder zur Aufbringung einer Beschichtung auf eine Trägerbahn aus Papier, Kunststoffolie oder Vlies unter Verwendung einer Beschichtungsmasse, die nach der Aufbringung erhitzt wird. Gemäß dem erfindungsgemäßen Verfahren wird eine Beschichtungszusammensetzung verwendet, die (a) 10 bis 50 Gew.-%, vorzugsweise 20 bis 30 Gew.-% eines Acrylsäureesters oder eines Acrylsäureestercopolymerisates mit einem Comonomeranteil unter 20 Gew.-%, vorzugsweise unter 10 Gew.-%, oder eines Styrol-Acrylsäureester-Copolymerisates mit einem geringen Styrol- bzw. Polystyrol-Gehalt, (b) 5 bis 25 Gew.-%, vorzugsweise 10 bis 20 Gew.-% eines styrol-Acrylsäureester-Copolymerisates (mit einem gegenüber (a) höheren Styrol- oder Polystyrol-Gehalt), (c) bis zu 10 Gew.-%, vorzugsweise bis zu 5 Gew.-% Wasser, (d) 5 bis 15 Gew.-%, vorzugsweise 6 bis 10 Gew.-% eines natürlichen und/oder gefällten Calciumcarbonats, (e) 7 bis 15 Gew.-%, vorzugsweise 9 bis 12 Gew.-% Kieselgur, (f) 5 bis 15 Gew.-% vorzugsweise 8 bis 12 Gew.-% eines gemahlenen Talkums, (g) 5 bis 10 Gew.-%, vorzugsweise 6 bis 8 Gew.-% eines Titandioxidpigments, (h) weniger als 3 Gew.-%, vorzugsweise weniger als 1 Gew.-% organisches Lösungsmittel, sowie Rest aus Verarbeitungshilfsmitteln, Konservierungsmitteln, Farbpigmenten, Farbstoffen und/oder Verdickungsmitteln, wobei das Gesamtgewicht jeweils auf 100 Gew.-% ergänzt wird, und (i) 2 bis 6 Gew.-%, vorzugsweise 3 Gew.-%, bezogen auf das Gesamtgewicht der Beschichtung, Glashohlkugeln, Glashohlkörper und/oder Kunststoffhohlkörper mit einem mittleren Teilchendurchmesser von 10 bis 150 $\mu$m und/oder Kunststoffmikrohohlkugeln und/oder gefüllte Kunststoffhohlkörper, enthält oder daraus besteht. Die Beschichtungsmasse wird unter Verwendung eines Rotationssiebdruck-, Rotationstiefdruck-, Quetschdruckverfahren oder Leimdruckverfahren auf die Trägerbahn aufgebracht und/oder profiliert, wonach die Beschichtungsmasse bei einer Temperatur von 60 bis 130 °C, vorzugsweise 80 bis 125 °C vorgetrocknet und nachfolgend auf eine Temperatur von 130 bis 220 °C, vorzugsweise 150 bis 205 °C erhitzt und nachfolgend abgekühlt wird.

Die unter (a) und (b) für die Beschichtungszusammensetzung berechneten Kunstharzdispersionen (Acrylsäureester-Copolymerisatdispersion und/oder Acrylsäureesterdispersion) sind als 50 gew.-%ige Dispersion berechnet.

Der Einsatz der Dispersion zu (a) und (b) erfolgt als 35 bis 65 gew.-%ige Dispersion, vorzugsweise als 45 bis 62 gew.-%ige Dispersion. Ganz besonders wird der Einsatz zu (a) und/oder (b) unter Verwendung einer 50 gew.-%igen Dispersion bevorzugt. Als bevorzugte Ausführungsform wird auch zu (a) anstelle der Acrylsäureesterdispersion eine Acrylsäureester-Copolymerisatdispersion, vorzugsweise mit einem geringeren Styrol- bzw. Polystyrolgehalt als unter (b) eingesetzt.

Als Acrylsäureester und/oder Acrylsäureestercomponente im Copolymerisat werden die an sich bekannten Acrylate wie Methyl-, Ethyl-, Propyl-, Butyl-, Hexyl- und dergleichen Acrylate eingesetzt. Zweckmäßig sind in der Estergruppe 1 bis 4 C-Atome. Bevorzugt wird Butylacrylat oder Styrol-Butylacrylat-Dispersion verwendet, vorzugsweise n-Butylacrylat, Isobutylacrylat, tert.-Butylacrylat. Diese können ganz, vorzugsweise bis zu 50 Gew.-% (bezogen auf 100 Gewichtsteile des Acrylates), durch n-Butylmethacrylat, Isobutylmethacrylat und/oder tert.-Butylmethacrylat ersetzt werden. Bevorzugt werden jedoch die Acrylate bzw. Styrol-Acrylat-Copolymerisate eingesetzt.

Die Mitverwendung von Vinylacetaten (Homo- oder Copolymerisat) oder Vinylacetatdispersionen wird möglichst vermieden, da diese das System in einer gewissen Konzentration stören können.

Das natürliche oder gefällte Kalziumcarbonat weist nach einer bevorzugten Ausführungsform eine mittlere Teilchengröße von unter 20 $\mu$m, vorzugsweise unter 10 $\mu$m auf. Das Kalziumcarbonat wird nach einer Ausführungsform bis zu 100 Gew.-% (bezogen auf 100 Gewichtsteile eingesetztes Kalziumcarbonat), vorzugsweise bis zu 50 Gew.-% durch aufgemahlene Dolomite oder durch Mikrodolomit ersetzt (Ersatz durch gleiche Gewichtsmenge).

Das eingesetzte Titandioxid wird nach einer Ausführungsform bis zu 100 Gew.-% (bezogen auf 100 Gewichtsteile eingesetztes Titandioxid), vorzugsweise bis zu 50 Gew.-%, durch andere Weißpigmente, vorzugsweise Zinkoxide, Zinksulfide oder feingefälltes Calciumcarbonat mit einer Teilchengröße unter 0,5 $\mu$m ersetzt (Ersatz durch gleiche Gewichtsmengen).

Die eingesetzte Kieselgur muß wasseraufnahmefähig sein, so daß sie im wasserarmen, vorzugsweise wasserfreien Zustand der Beschichtungsmasse zugefügt werden kann.

Das gemahlene oder feinteilige Talkum kann bis zu 100 Gew.-% (bezogen auf 100 Gewichtsteile eingesetztes Talkum), vorzugsweise bis zu 50 Gew.-%, durch ein anderes sehr feinteiliges Magnesium und/oder Aluminiumsilicat mit vergleichbaren Eigenschaften und/oder durch ein Magnesiumhydroxycarbonat (Hydrotalcit) und/oder durch feingemahlenes Kaolin oder feingemahlenen Glimmer ersetzt werden. Besonders bevorzugt wird jedoch das gemahlene oder feinteilige Talkum unmittelbar eingesetzt (d. h. ohne Verwendung oder Mitverwendung anderer Silicate).

Die im Rahmen der Erfindung verwendeten Kunststoffmikrohohlkörper (gefüllt) und/oder gefüllten Kunststoffhohlkörper weisen nach einer bevorzugten Ausführungsform eine mittlere Teilchengröße unter 25 $\mu$m, vorzugsweise unter 15 $\mu$m auf. Die ungefüllten (hohlen) Kunststoffhohlkörper oder Kunststoffmikrohohlkörper weisen nach einer bevorzugten Ausführungsform eine mittlere Teilchengröße von 10 bis 150 $\mu$m, vorzugsweise 15 bis 80 $\mu$m, auf.

Nach einer bevorzugten Ausführungsform enthalten die gefüllten Mikrohohlkörper und/oder die gefüllten Kunststoffhohlkörper einen bei Raumtemperatur gasförmigen oder noch flüssigen Kohlenwasserstoff, vorzugsweise einen gesättigten Kohlenwasserstoff mit $C_3$ bis $C_5$ allein oder als Mischungsbestandteil mit einem anderen Kohlenwasserstoff oder anderen Gas. Die Kunststoffhohlkörper oder Mikrohohlkörper können als flüchtige Flüssigkeit oder gasförmigen Stoff an sich bekannte Kohlenwasserstoffe wie Pentan, Hexan, Heptan, Methylpentan, bestimmte halogenierte Kohlenwasserstoffe und dergleichen enthalten, wobei jedoch bevorzugt keine halogenierten Kohlenwasserstoffe verwendet werden. Das Gas oder die flüchtige Flüssigkeit wird so ausgewählt, daß sie das thermoplastische Material, aus dem die Kunststoffmikrohohlkörper oder Kunststoffhohlkörper bestehen, nicht auflöst. Die mittleren Teilchengrößen dieser gefüllten Kunst-

4

stoffhohlkörper oder Kunststoffkugeln liegen unter 20 $\mu$m, vorzugsweise unter 10 $\mu$m.

Nach einer bevorzugten Ausführungsform werden die Glashohlkörper allein oder im Gemisch mit den gefüllten und/oder ungefüllten Kunststoffmikrohohlkugeln oder Kunststoffhohlkörpern eingesetzt. Dabei ist bevorzugt der mittlere Durchmesser der Glashohlkörper oder Glashohlkugeln gleich, vorzugsweise jedoch größer als der mittlere Durchmesser der gefüllten und/oder ungefüllten Kunststoffhohlkörper oder Kunststoffmikrohohlkugeln. Nach einer bevorzugten Ausführungsform beträgt das Verhältnis des mittleren Durchmessers der Glashohlkörper oder Glashohlkugeln und/oder ungefüllten Kunststoffhohlkörpern (z.B. lediglich Luftanschluß) zu den gefüllten Kunststoffhohlkörpern und/oder Kunststoffmikrohohlkugeln wie 1 zu kleiner als 0,8 vorzugsweise 1 zu kleiner als 0,5.

Bevorzugt werden Glashohlkörper allein oder im Gemisch mit Kunststoffhohlkugeln oder Kunststoffmikrohohlkörper (gefüllt oder ungefüllt) verwendet, weil bei dieser Ausführungsform bei gleicher Porenverteilung und/oder bei gleichem Porenvolumen eine besonders gute Stabilität der Beschichtung gegeben ist. Besonders bevorzugt werden Glashohlkörper oder Glaskugeln mit gefüllten Kunststoffhohlkugeln, gefüllten Kunststoffmikrohohlkörpern oder gefüllten Kunststoffhohlkörpern eingesetzt. Damit gelingt es ganz besonders Strukturtapeten oder Beschichtungen mit einer kunststoffschaumähnlichen Form (mit bestimmten Luftporen oder Luftporenvolumen) herzustellen, bei denen die Beschichtung eine gewisse mechanische Stabilität, z.B. eine gewisse Kratzfestigkeit aufweist, ohne daß chemische Treibmittel in der Beschichtungsmasse enthalten sind. Die Glashohlkugeln oder Glashohlkörper weisen einen mittleren Durchmesser von 10 bis 150 $\mu$m, vorzugsweise 15 bis 80 $\mu$m, auf. Die mitverwendeten Fasern stützen zusätzlich die Beschichtungsmasse.

Nach einer anderen Ausführungsform werden gefüllte und/oder ungefüllte Kunststoffmikrohohlkugeln oder Kunststoffhohlkörper eingesetzt. Hier kann die Beschichtung sehr weich eingestellt werden. Es besteht jedoch der Nachteil, daß die Beschichtung leichter beschädigt werden kann.

Nach einer Ausführungsform wird ein Gemisch von gefüllten und ungefüllten Kunststoffmikrohohlkugeln oder Kunststoffhohlkörpern verwendet.

Die eingesetzten Holz- und/oder Kunststoffasern dürfen nicht durch Asbestfasern ersetzt werden, da diese zu spröde bzw. starr sind. Darüber hinaus bestehen gesundheitliche Bedenken.

Die erfindungsgemäße Beschichtungsmasse ist speziell auf die genannten Trägerbahnen abgestimmt und nicht als Anstrichmittel oder Anstrichfarbe für Mauern und Wände verwendbar. Umgekehrt sind Anstrichmittel und Anstrichfarben nicht im Zusammenhang mit den Trägerbahnen oder dem Verfahren geeignet.

Bevorzugt werden Trägerbahnen aus Papier (bzw. Zellulose) eingesetzt. Nach einer bevorzugten Ausführungsform weisen die eingesetzten oder einzusetzenden Papierträgerbahnen ein Flächengewicht von 70 bis 200 g/m$^2$, vorzugsweise 80 bis 130 g/m$^2$, auf.

Nach einer weiteren bevorzugten Ausführungsform besteht die Trägerbahn aus einem Gemisch von Zellulose mit Kunststoffasern, vorzugsweise Polyesterfasern und/oder Polyolefinfasern (Polyethylen- und/oder Polypropylenfasern), und/oder mit Glasfasern.

Kunststoffolien oder Trägerbahnen nur aus Kunststoffasern können auch eingesetzt werden, sind jedoch nicht bevorzugt, da das Wasseraufnahmevermögen, Stabilität der Beschichtungsmasse und andere Eigenschaften der Beschichtung auf die vorgenannten Trägerbahnen bevorzugt abgestimmt sind. Die einzusetzenden Trägerbahnen der Erfindung sind ohne oder mit Fond (Voranstrich oder Vorstreichmasse). Unter Verwendung der erfindungsgemäßen Beschichtungsmasse, aufgebracht auf diese Trägerbahnen, gelingt es auch ohne Verwendung chemischer Treibmittel Strukturtapeten oder Profiltapeten mit entsprechenden Strukturen, wie sie bei der PVC-Schaumtapete bekannt sind, herzustellen.

Bei der Beschichtungsmasse liegt die minimale Filmbildungstemperatur (MFT) von (a) nach einer bevorzugten Ausführungsform unter 10 °C, vorzugsweise unter 8 °C und die MFT von (b) über 10 °C, vorzugsweise über 12 °C.

**Beispiele für die erfindungsgemäße Beschichtungszusammensetzung:**

**Beispiel 1:**

```
Acrylsäureesterdispersion              32   Gew.-%
        50 %-ig in H₂O

Styrol-Acrylsäureesterdispersion       20   Gew.-%
        50 %-ig in H₂O

Wasser                                4,8 Gew.-%

Konservierungsmittel                  0,2 Gew.-%

Retensionsmittel z.B. Propylenglykol  1,- Gew.-%

Titandioxidpigment                     8,- Gew.-%

Calciumcarbonat gemahlen               7,- Gew.-%

weißer Talkum, gemahlen               12,0 Gew.-%

Fichtenholzfaser                       2,- Gew.-%

Kieselgur gemahlen                    12,- Gew.-%

Glasmikrohohlkugeln

oder Kunststoffhohlkugeln              3,- Gew.-%
                                      -------------

                                     100,-
```

Die Dispergierung der Beschichtungszusammensetzung erfolgte in hochtourigen Rührscheibengeräten. Die Druckviskosität dieser Zusammensetzung, die in allen Farbtönen einfärbbar war, betrug 6000 mPa x s.

Für die Herstellung von Tapeten mit von der Oberfläche vorstehenden profilierten Kunststoffbeschichtung im Rotationstiefdruckverfahren erfolgte die Applikation dieser Beschichtungszusammensetzung mit Zylinderwalze mit Gravurtiefe von 0,3 bis 1 mm auf Trägermaterial wie Papier oder Vlies. Die Trocknung erfolgte bei einer Temperatur von 200 °C. Die erreichbare Maschinengeschwindigkeit hängt von der Trockenkanallänge und der Abführung des Wasserdampfes ab. Je nach Dessin lassen sich Geschwindigkeiten von 50 - 100 m/min. erzielen.

6

**Beispiel 2:**

| | |
|---|---|
| Acrylsäureesterdispersion<br>50 %-ig in Wasser | 32 Gew.-% |
| Styrol-Acrylsäureesterdispersion<br>50 %-ig in Wasser | 20 Gew.-% |
| Wasser | 7,8 " |
| Konservierungsmittel | 0,2 " |
| Retensionsmittel z.B. Propylenglykol | 2,- " |
| Titandioxidpigment | 6,- " |
| Calciumcarbonat gemahlen | 8,- " |
| weißer Talkum, gemahlen | 10,0 " |
| Kieselgur gemahlen | 10,- " |
| Kieselsäure gefällt | 1,- " |
| Glasmikrohohlkugeln<br>oder Kunststoffhohlkugeln | 3,- " |
| | 100,- |

Die Dispergierung der Beschichtungszusammensetzung erfolgte in hochtourigen Rührscheibengeräten. Die Druckviskosität dieser Zusammensetzung, die in allen Farbtönen einfärbbar war, betrug 4000 - 6000 mPa x s.

Für die Herstellung von Tapeten im Rotationssiebdruckverfahren erfolgte die Applikation dieser Beschichtungszusammensetzung mit bedampften Druckschablonen, um Antrocknung während eventueller Stillstandzeiten zu vermeiden, auf Trägermaterial wie Papier, Vlies oder Kunststoffolie. Die Trocknung erfolgte bei einer Temperatur von 200 °C. Die erreichbare Maschinengeschwindigkeit hängt von der Trockenkanallänge und der Abführung des Wasserdampfes ab. Nach entsprechender Einstellung ließ sich eine Maschinengeschwindigkeit von 50 m/min erzielen.

**Beispiel 3:**

| | | |
|---|---|---|
| (a) | Acrylsäureester-Styrol-Copolymerisat-Dispersion (mit einem geringen Styrol- bzw. Polystyrolgehalt) | 28 Gew.-% |
| | 50 %-ig in Wasser | |
| | MFT 0 °C (minimale Filmbildungs-temperatur) | |
| (b) | Styrol-Acrylsäureesterdispersion (mit einem höheren Styrol- oder Polystyrolgehalt als bei (a) | 24 Gew.-% |
| | 50 %ig in Wasser | |
| | MFT 18° C, (minimale Filmbildungs-temperatur) | |
| | Wasser | 7,8 Gew.-% |
| | Konservierungsmittel | 0,2 Gew.-% |
| | Retensionsmittel z.B.Propylenglykol | 2 Gew.-% |
| | Titandioxidpigment | 6 Gew.-% |
| | Calciumcarbonat gemahlen | 8 Gew.-% |
| | weißer Talkum, gemahlen | 10 Gew.-% |
| | Kieselgur gemahlen | 10 Gew.-% |
| | Kieselsäure gefällt | 1 Gew.-% |
| | Glasmikrohohlkugeln mit einem mittleren Teilchendurchmesser von 80 $\mu$m und/oder Kunststoffhohlkugeln mit einem mittleren Teilchendurchmesser von 7,5 $\mu$m (neu gefüllt), falls unge-füllt 15 $\mu$m mittlerer Teilchendurch-messer | 3 Gew.-% |
| | | 100 Gew.-% |

Verarbeitung und Aufbringung wie Beispiel 1.

**Beispiel 4:**

(a)      Acrylsäureester-Styrol-
Copolymerisat-Dispersion
(mit einem geringen Styrol-
bwz. Polystyrolgehalt)             29    Gew.-%
50 %-ig in Wasser
MFT 0 °C (minimale Filmbildungs-
temperatur)

(b)      Styrol-Acrylsäureesterdispersion
(mit einem höheren Styrol- oder
Polystyrolgehalt als bei (a)     23    Gew.-%
MFT 18 ° C, (minimale Filmbildungs-
temperatur)

| | | |
|---|---|---|
| Wasser | 7,8 | Gew.-% |
| Konservierungsmittel | 0,2 | Gew.-% |
| Retensionsmittel z.B.Propylenglykol | 2 | Gew.-% |
| Titandioxidpigment | 6 | Gew.-% |
| Calziumcarbonat gemahlen | 8 | Gew.-% |
| weißer Talkum, gemahlen | 10 | Gew.-% |
| Kieselgur gemahlen | 10 | Gew.-% |
| Kieselsäure gefällt | 1 | Gew.-% |

Gemisch von Glasmikrohohlkugeln
20 μ (mittlerer Durchmesser) mit
gefüllten Kunststoffhohlkörpern

| | | |
|---|---|---|
| 7,5 μ (mittlerer Durchmesser) | 3 | Gew.-% |
| | 100 | Gew.-% |

Verarbeitung und Aufbringung wie Beispiel 2.

9

**Beispiel 5:**

| | | | |
|---|---|---|---|
| (a) | Acrylsäureester-Styrol-Copolymerisat-Dispersion (mit einem geringen Styrol- bzw. Polystyrolgehalt) | 29 | Gew.-% |

50 %-ig in Wasser
MFT 1 °C (minimale Filmbildungs-temperatur)

| | | | |
|---|---|---|---|
| (b) | Styrol-Acrylsäureesterdispersion (mit einem höheren Styrol- oder Polystyrolgehalt als bei (a) | 23 | Gew.-% |

50 %ig in Wasser
MFT 18° C, (minimale Filmbildungs-temperatur)

| | | |
|---|---|---|
| Wasser | 7,8 | Gew.-% |
| Konservierungsmittel | 0,2 | Gew.-% |
| Retensionsmittel z.B.Propylenglykol | 2 | Gew.-% |
| Titandioxidpigment | 6 | Gew.-% |
| Calciumcarbonat gemahlen | 8 | Gew.-% |
| weißer Talkum, gemahlen | 11 | Gew.-% |
| Kieselgur gemahlen | 11 | Gew.-% |
| Kieselsäure gefällt | 1 | Gew.-% |
| Glasmikrohohlkugeln (30 $\mu$m mittlerer Teilchendurchmesser) und mit KW, vorzugsweise $C_4$, gefüllte Kunststoffhohlkugeln (mittlerer Teilchendurchmesser 7,5 $\mu$m) | 3 | Gew.-% |
| | 100 | Gew.-% |

Verarbeitung und Aufbringung auf Papier als Trägerbahn wie Beispiel 1.

Der Styrol- bzw. Polystyrolgehalt von (a) lag um mehr als 8 Gew.-%, vorzugsweise mehr als 12 Gew.-%, unter dem Styrol- bzw. Polystyrolgehalt von (b) in den Beispielen 3, 4 und 5.

**Patentansprüche**

1. Beschichtungszusammensetzung auf der Basis wäßriger, weichmacherfreier Kunststoffdispersionen für die Herstellung von Tapeten und daraus hergestellten Tapeten, insbesondere von Profiltapeten, die aus einer Trägerbahn aus Papier, Kunststoffolie oder Vlies sowie aus einer auf der Oberfläche der

EP 0 492 087 B1

Trägerbahn angeordneten und mit dieser verbundenen Beschichtung aus Kunststoff bestehen, dadurch gekennzeichnet, daß die Beschichtungszusammensetzung aus

(a) 10 bis 50 Gew.-%, vorzugsweise

20 bis 30 Gew.-%

einer Acrylsäureesterdispersion (berechnet als 50 %-ige Dispersion),

(b) 5 bis 25 Gew.-%, vorzugsweise

10 bis 20 Gew.-%

einer Styrol-Acrylsäureester-Copolymerisatdispersion (berechnet als 50 %ige Dispersion),

(c) bis zu 10 Gew.-%, vorzugsweise

bis zu 5 Gew.-%

Wasser,

(d) 5 bis 15 Gew.-%, vorzugsweise

6 bis 10 Gew.-%

eines natürlichen und/oder gefällten Calciumcarbonats,

(e) 7 bis 15 Gew.-%, vorzugsweise

9 bis 12 Gew.-%

Kieselgur,

(f) 5 bis 15 Gew.-%, vorzugsweise

8 bis 12 Gew.-%

eines gemahlenen Talkums,

(g) 5 bis 10 Gew.-%, vorzugsweise

6 bis 8 Gew.-%

eines Titandioxidpigments,

(h) weniger als 3 Gew.-%, vorzugsweise

weniger als 1 Gew.-%

organisches Lösungsmittel, sowie

Rest aus Verarbeitungshilfsmitteln, Konservierungsmitteln, Farbpigmenten, Farbstoffen und/oder Verdikkungsmitteln, wobei das Gesamtgewicht jeweils auf 100 Gew.-% ergänzt wird, und

(i) 2 bis 6 Gew.-%, vorzugsweise

3 Gew.-%,

bezogen auf das Gesamtgewicht der Beschichtung, Glashohlkugeln mit einem mittleren Teilchendurchmesser von 10 bis 150 $\mu$m und/oder Kunststoffmikrohohlkugeln und/oder gefüllte Kunststoffhohlkörper besteht oder diese Bestandteile enthält.

2.  Beschichtungszusammensetzung nach Anspruch 1, dadurch gekennzeichnet, daß die Beschichtungszusammensetzung

1 bis 3 Gew.-%, vorzugsweise

2 Gew.-%

Holzfasern und/oder Kunststoffasern enthält.

3.  Beschichtungszusammensetzung nach Anspruch 1, dadurch gekennzeichnet, daß die Acrylsäureesterdispersion (a) zu 15 bis 100 Gew.-% (bezogen auf 100 Gew.-Teile Acrylsäureesterdispersion) durch die gleiche Gewichtsmenge einer Acrylsäureestercopolymerisatdispersion (berechnet als 50 %-ige Dispersion) mit einem Comonomeranteil unter 20 Gew.-%, vorzugsweise unter 10 Gew.-%, vorzugsweise durch eine Styrol-Acrylsäureester-Copolymerisat-Dispersion mit einem geringen Styrol- bzw. Polystyrol-Gehalt und/oder durch eine Acrylsäureester-Copolymerisationsdispersion (a) deren minimale Filmbildungstemperaturen (MFT) um mehr als 6 °C, vorzugsweise mehr als 10 °C unter der minimalen Filmbildungstemperatur von (b) liegt, ersetzt ist.

4.  Beschichtungszusammensetzung nach einem oder mehreren der Ansprüche 1 bis 3, dadurch gekennzeichnet, daß die aufgebrachte Gewichtsmenge der Beschichtungszusammensetzung

30 bis 300 g/m$^2$ (Trockengewicht)

beträgt.

5.  Beschichtungszusammensetzung nach einem oder mehreren der Ansprüche 1 bis 4, dadurch gekennzeichnet, daß die Dichte der Beschichtungszusammensetzung (bezogen auf die nicht getrocknete Beschichtungszusammensetzung)

0,8 bis 1,4 g/cm$^3$

11

beträgt und/oder die Beschichtungszusammensetzung 2 Styrol-Acrylsäureester-Copolimerisate (a und b) enthält, die einen unterschiedliche Styrolgehalt aufweisen.

6. Tapeten, insbesondere Profiltapeten, die aus einer Trägerbahn aus Papier, Kunststoffolie oder Vlies sowie aus einer auf der Oberfläche der Trägerbahn angeordneten und mit dieser verbundenen Beschichtung aus Kunststoff bestehen, dadurch gekennzeichnet, daß die Beschichtungszusammensetzung

(a) 5 bis 25 Gew.-Teile, vorzugsweise
10 bis 15 Gew.-Teile

eines Acrylsäureesters oder eines Acrylsäureestercopolymerisates mit einem Comonomeranteil unter 20 Gew.-%, vorzugsweise unter 10 Gew.-%, oder eines Styrol-Acrylsäureester-Copolymerisates mit einem geringen Styrol- bzw. Polystyrol-Gehalt

(b) 2,5 bis 12,5 Gew.-Teile, vorzugsweise
5 bis 10 Gew.-Teile

eines Styrol-Acrylsäureester-Copolymerisates (mit einem gegenüber (a) höheren Styrol- oder Polystyrol-Gehalt)

(c) 5 bis 15 Gew.-Teile, vorzugsweise
6 bis 10 Gew.-Teile

eines natürlichen und/oder gefällten Calciumcarbonats,

(d) 7 bis 15 Gew.-Teile, vorzugsweise
9 bis 12 Gew.-Teile

Kieselgur,

(e) 5 bis 15 Gew.-Teile, vorzugsweise
8 bis 12 Gew.-Teile

eines gemahlenen Talkums,

(f) 5 bis 10 Gew.-Teile, vorzugsweise
6 bis 8 Gew.-Teile

eines Titandioxidpigments,

(g) 2 bis 6 Gew.-Teile, vorzugsweise
3 Gew.-Teile,

bezogen auf das Gesamtgewicht der Beschichtung, Glashohlkugeln und/oder Kunststoffhohlkörpern mit einem mittleren Teilchendurchmesser von 10 bis 150 μm und/oder Kunststoffmikrohohlkugeln und/oder gefüllte Kunststoffhohlkörper, sowie gegebenenfalls Verarbeitungshilfsmitteln, Konservierungsmitteln, Farbpigmenten, Farbstoffen und/oder Verdickungsmitteln enthält oder daraus besteht.

7. Tapete nach Anspruch 6, dadurch gekennzeichnet, daß die Beschichtungszusammensetzung
1 bis 3 Gew.-Teile, vorzugsweise
2 Gew.-Teile
Holzfasern und/oder Kunststoffasern enthält.

8. Tapete nach Ansprüchen 6 und 7, dadurch gekennzeichnet, daß die auf der Trägerbahn angeordnete Gewichtsmenge der Beschichtungszusammensetzung
30 bis 300 g/m$^2$ (Trockengewicht)
beträgt.

9. Verfahren zur Herstellung von Tapeten oder zur Aufbringung einer Beschichtung auf eine Trägerbahn aus Papier, Kunststoffolie oder Vlies unter Verwendung einer Beschichtungsmasse, die nach der Aufbringung erhitzt wird, dadurch gekennzeichnet, daß eine Beschichtungszusammensetzung verwendet wird, die

(a) 10 bis 50 Gew.-%, vorzugsweise
20 bis 30 Gew.-%

eines Acrylsäureesters oder eines Acrylsäureestercopolymerisates mit einem Comonomeranteil unter 20 Gew.-%, vorzugsweise unter 10 Gew.-%, oder eines Styrol-Acrylsäureester-Copolymerisates mit einem geringen Styrol bzw. Polystyrol-Gehalt

(b) 5 bis 25 Gew.-%, vorzugsweise
10 bis 20 Gew.-%

eines Styrol-Acrylsäureester-Copolymerisates (mit einem gegenüber (a) höheren Styrol- oder Polystyrol-Gehalt)

(c) bis zu 10 Gew.-%, vorzugsweise

bis zu 5 Gew.-%

Wasser,

(d) 5 bis 15 Gew.-%, vorzugsweise

6 bis 10 Gew.-%

eines natürlichen und/oder gefällten Calciumcarbonats,

(e) 7 bis 15 Gew.-%, vorzugsweise

9 bis 12 Gew.-%

Kieselgur,

(f) 5 bis 15 Gew.-% vorzugsweise

8 bis 12 Gew.-%

eines gemahlenen Talkums,

(g) 5 bis 10 Gew.-%, vorzugsweise

6 bis 8 Gew.-%

eines Titandioxidpigments,

(h) weniger als 3 Gew.-% vorzugsweise

weniger als 1 Gew.-%

organisches Lösungsmittel, sowie

Rest aus Verarbeitungshilfsmitteln, Konservierungsmitteln, Farbpigmenten, Farbstoffen und/oder Verdik-kungsmitteln, wobei das Gesamtgewicht jeweils auf 100 Gew.-% ergänzt wird, und

(i) 2 bis 6 Gew.-% vorzugsweise

3 Gew.-%,

bezogen auf das Gesamtgewicht der Beschichtung, Glashohlkugeln, Glashohlkörper und/oder Kunststoffhohlkörper mit einem mittleren Teilchendurchmesser von 10 bis 150 µm und/oder Kunststoffmikrohohlkugeln und/oder gefüllte Kunststoffhohlkörper ent-hält oder daraus besteht, daß die Beschichtungsmasse unter Verwendung eines Rotationssiebdruck-, Rotationstiefdruck-, Quetschdruckverfahren oder Leimdruckverfahren auf die Trägerbahn aufgebracht und/oder profiliert wird, daß die Beschichtungsmasse bei einer Temperatur von

60 bis 130 °C, vorzugsweise

80 bis 125 °C

vorgetrocknet und nachfolgend auf eine Temperatur von

130 bis 220 °C, vorzugsweise

150 bis 205 °C

erhitzt und nachfolgend abgekühlt wird.

**10.** Verwendung der Beschichtungszusammensetzung nach einem oder mehreren der Ansprüche 1 bis 5 zur Herstellung von Tapeten im Rotationssiebdruck- oder Rotationstiefdruckverfahren mit von der Oberfläche vorstehenden profilierten Kunststoffbeschichtung.

## Claims

**1.** A coating composition on the basis of aqueous, softener-free plastics dispersions for the production of wallpapers and wallpapers produced therefrom, in particular of three-dimensional wallpapers, which consist of a backing sheet of paper, plastics film or non-woven fabric and of a coating of plastic located on the surface of the backing sheet and joined thereto, characterised in that the coating composition consists of

(a) 10 to 50% by weight, preferably

20 to 30% by weight,

of an acrylic acid ester dispersion (calculated as 50% dispersion)

(b) 5 to 25% by weight, preferably

10 to 20% by weight,

of a styrene-acrylic acid ester copolymer dispersion (calculated as 50% dispersion),

(c) up to 10% by weight, preferably

up to 5% by weight,

water,

(d) 5 to 15% by weight, preferably

6 to 10% by weight,

of a natural and/or precipitated calcium carbonate,

(e) 7 to 15% by weight, preferably

9 to 12% by weight,

diatomaceous earth,

(f) 5 to 15% by weight, preferably

8 to 12% by weight,

of a ground talcum,

(g) 5 to 10% by weight, preferably

6 to 8% by weight,

of a titanium dioxide pigment,

(h) less than 3% by weight, preferably

less than 1% by weight,

organic solvent, and

remainder consisting of processing aids, preservation agents, coloured pigments, dyes and/or thickening agents, the total weight being made up to 100% by weight in each case, and

(i) 2 to 6% by weight, preferably

3% by weight,

relative to the total weight of the coating, hollow glass spheres having an average particle diameter of 10 to 150 $\mu$m and/or hollow plastic microspheres and/or filled hollow plastic articles or contains these constituents.

2. A coating composition according to Claim 1, characterised in that the coating composition contains

1 to 3% by weight, preferably

2% by weight,

wood fibres and/or plastic fibres.

3. A coating composition according to Claim 1, characterised in that 15 to 100% by weight (relative to 100 parts by weight acrylic acid ester dispersion) of the acrylic acid ester dispersion (a) is replaced by the same quantity by weight of an acrylic acid ester copolymer dispersion (calculated as 50% dispersion) having a comonomer content of less than 20% by weight, preferably less than 10% by weight, preferably by a styrene-acrylic acid ester copolymer dispersion having a low styrene or polystyrene content and/or by an acrylic acid ester copolymer dispersion (a), the minimum film forming temperature (MFT) of which lies more than 6°C, preferably more than 10°C, below the minimum film forming temperature of (b).

4. A coating composition according to one or more of Claims 1 to 3, characterised in that the applied quantity by weight of the coating composition is

30 to 300 g/m$^2$ (dry weight).

5. A coating composition according to one or more of Claims 1 to 4, characterised in that the density of the coating composition (relative to the non-dried coating composition) is

0.8 to 1.4 g/cm$^3$

and/or the coating composition contains 2 styrene-acrylic acid ester copolymers (a and b) which have different styrene contents.

6. Wallpapers, in particular three-dimensional wallpapers, which consist of a backing sheet of paper, plastics film or non-woven fabric and also of a coating of plastic located on the surface of the backing sheet and joined thereto, characterised in that the coating composition consists of or contains

(a) 5 to 25 parts by weight, preferably

10 to 15 parts by weight,

of an acrylic acid ester or an acrylic acid ester copolymer having a comonomer content of less than 20% by weight, preferably less than 10% by weight, or of a styrene-acrylic acid ester copolymer having a low styrene or polystyrene content,

(b) 2.5 to 12.5 parts by weight, preferably

5 to 10 parts by weight,

of a styrene-acrylic acid ester copolymer (having a higher styrene or polystyrene content than (a)),

(c) 5 to 15 parts by weight, preferably

6 to 10 parts by weight,

of a natural and/or precipitated calcium carbonate,

(d) 7 to 15 parts by weight, preferably
9 to 12 parts by weight,
diatomaceous earth,
(e) 5 to 15 parts by weight, preferably
8 to 12 parts by weight,
of a ground talcum,
(f) 5 to 10 parts by weight, preferably
6 to 8 parts by weight,
of a titanium dioxide pigment,
(g) 2 to 6 parts by weight, preferably
3 parts by weight,
relative to the total weight of the coating, hollow glass spheres and/or hollow plastic articles having an average particle diameter of 10 to 150 $\mu$m and/or hollow plastic microspheres and/or filled hollow plastic articles, and also optionally processing aids, preservation agents, coloured pigments, dyes and/or thickening agents.

7.  A wallpaper according to Claim 6, characterised in that the coating composition contains
1 to 3 parts by weight, preferably
2 parts by weight,
wood fibres and/or plastic fibres.

8.  A wallpaper according to Claims 6 and 7, characterised in that the quantity by weight of the coating composition located on the backing sheet is
30 to 300 g/m$^2$ (dry weight).

9.  A method for producing wallpapers or for applying a coating to a backing sheet of paper, plastics film or non-woven fabric using a coating compound which is heated after application, characterised in that a coating composition is used which contains or consists of
(a) 10 to 50% by weight, preferably
20 to 30% by weight,
of an acrylic acid ester or an acrylic acid ester copolymer having a comonomer content of less than 20% by weight, preferably less than 10% by weight, or of a styrene-acrylic acid ester copolymer having a low styrene or polystyrene content,
(b) 5 to 25%, preferably
10 to 20% by weight,
of a styrene-acrylic acid ester copolymer (having a higher styrene or polystyrene content than (a)),
(c) up to 10% by weight, preferably
up to 5% by weight,
water,
(d) 5 to 15% by weight, preferably
6 to 10% by weight,
of a natural and/or precipitated calcium carbonate,
(e) 7 to 15% by weight, preferably
9 to 12% by weight,
diatomaceous earth,
(f) 5 to 15% by weight, preferably
8 to 12% by weight,
of a ground talcum,
(g) 5 to 10% by weight, preferably
6 to 8% by weight,
of a titanium dioxide pigment,
(h) less than 3% by weight, preferably
less than 1% by weight,
organic solvent, and
remainder consisting of processing aids, preservation agents, coloured pigments, dyes and/or thickening agents, the total weight being made up to 100% by weight in each case, and
(i) 2 to 6% by weight, preferably
3% by weight,

relative to the total weight of the coating, hollow glass spheres, hollow glass articles and/or hollow plastic articles having an average particle diameter of 10 to 150 μm and/or hollow plastic microspheres and/or filled hollow plastic articles, that the coating compound is applied to the backing sheet and/or is profiled using a rotary screen-printing, rotogravure-printing, squeeze-printing or size-based printing process, that the coating compound is pre-dried at a temperature of

60 to 130°C, preferably

80 to 125°C,

and is then heated to a temperature of

130 to 220°C, preferably

150 to 205°C,

and is then cooled.

10. The use of the coating composition according to one or more of Claims 1 to 5 for the production of wallpapers in a rotary screen-printing or rotary intaglio-printing process with a profiled plastic coating projecting from the surface.

**Revendications**

1. Composition de revêtement à base de dispersions aqueuses de matière(s) plastique(s) dépourvue(s) de plastifiant pour la production de papiers peints, et papiers peints ainsi fabriqués, notamment des papiers peints ou papiers de tentures profilés qui consistent en une feuille continue ou une bande de support en papier, une feuille de matière plastique ou une nappe ainsi qu'un revêtement de matière plastique disposée à la surface de la feuille continue de support et qui lui est reliée ou collée, composition caractérisée en ce qu'elle consiste en :

   a) 10 à 50 % en poids, avantageusmeent

   20 à 30 % en poids

   d'une dispersion d'un ester de l'acide acrylique (calculée pour une dispersion à 50 %),

   b) 5 à 25 % en poids, avantageusement

   10 à 20 % en poids

   d'une dispersion de copolymère de styrène/ester d'acide acrylique (calculée dans le cas d'une dispersion à 50 %),

   c) jusqu'à un maximum de 10 % en poids, avantageusement

   jusqu'à un maximum de 5 % en poids d'eau,

   d) 5 à 15 % en poids, avantageusement

   6 à 10 % en poids

   d'un carbonate de calcium naturel et/ou précipité,

   e) 7 à 15 % en poids, avantageusement

   9 à 12 % en poids de

   kieselgur,

   f) 5 à 15 % en poids, avantageusement

   8 à 12 % en poids

   d'un talc moulu ou broyé,

   g) 5 à 10 % en poids, avantageusement

   6 à 8 % en poids

   d'un pigment à base de dioxyde de titane,

   h) moins de 3 % en poids, avantageusement

   moins de 1 % en poids

   d'un solvant organique, ainsi qu'un reste constitué par des adjuvants de mise en oeuvre, des agents de conservation, des pigments colorés, des colorants et/ou des épaississants, le poids total correspondant toujours à 100 % en poids, et

   i) 2 à 6 % en poids, avantageusement

   3 % en poids,

   par rapport au poids total du revêtement, de billes creuses en verre ayant un diamètre moyen des particules de 10 à 150 μm et/ou de microbilles creuses d'une matière plastique et/ou de corps creux en une matière plastique garnie, ou bien en ce que cette composition contient les constituants précités.

2. Composition de revêtement selon la revendication 1, caractérisée en ce que la compositioon de revêtement contient 1 à 3 % en poids, avantageusement 2 % en poids de fibres de bois et/ou de fibres de matière plastique.

3. Composition de revêtement selon la revendication 1, caractérisée en ce que la dispersion d'un ester d'acide acrylique (a) est remplacée, pour 15 à 100 % en poids (par rapport à 100 parties en poids de la dispersion d'ester d'acide acrylique) par la même quantité pondérale d'une dispersion d'un copolymère d'ester d'acide acrylique (calculée dans le cas d'une dispersion à 50%) avec une proportion de comonomère(s) inférieure à 20 % en poids, avantageusement inférieure à 10 % en poids, avantageusement par une dispersion de copolymère de styrène/ester d'acide acrylique ayant une faible teneur en du styrène ou en du polystyrène et/ou par une dispersion de copolymère d'un ester d'acide acrylique (a) dont la température minimale de formation d'une pellicule (TMP) est inférieure de plus de 6°C, avantageusement inférieure de plus de 10°C, à la température minimale de formation de pellicules de (b).

4. Composition de revêtement selon une ou plusieurs des revendications 1 à 3, caractérisée en ce que la quantité pondérale de la composition de revêtement appliquée est de 30 à 300/m$^2$ (poids sec).

5. Composition de revêtement selon une ou plusieurs des revendications 1 à 4, caractérisée en ce que la masse volumique de la composition de revêtement (par rapport à la composition de revêtement non séchée) est de 0,8 à 1,4 g/cm$^3$ et/ou en ce que la composition de revêtement contient deux copolymères de styrène/ester d'acide acrylique (a et b), qui présentent une teneur différente en du styrène.

6. Papiers peints, en particulier papiers peints profilés, qui consistent en une feuille continue ou bande de support en papier, une feuille de matière plastique ou une nappe ainsi qu'en un revêtement de matière plastique disposée sur la surface de la feuille continue de support et liée à cette feuille, papiers caractérisés en ce que la composition de revêtement est constituée par ou comporte :
   a) 5 à 25 parties en poids, avantageusement
   10 à 15 parties en poids
d'un ester d'acide acrylique ou d'un copolymère d'ester acrylique avec une proportion de comonomère(s) inférieure à 20 %, avantageusement inférieure à 10 %, en poids, ou d'un copolymère de styrène/ester d'acide acrylique ayant une faible teneur en du styrène ou en du polystyrène,
   b) 2,5 à 12,5 parties en poids, avantageusement
   5 à 10 parties en poids
d'un copolymère de styrène/ester d'acide acrylique (ayant une plus forte teneur en du styrène ou en du polystyrène que (a))
   c) 5 à 15 parties en poids, avantageusement
   6 à 10 parties en poids
d'un carbonate de calcium naturel et/ou précipité,
   d) 7 à 15 parties en poids, avantageusement
   9 à 12 parties en poids de
kieselgur,
   e) 5 à 15 parties en poids, avantageusement
   8 à 12 parties en poids
d'un talc moulu ou broyé,
   f) 5 à 10 parties en poids, avantageusement
   6 à 8 parties en poids
d'un pigment à base de dioxyde de titane,
   g) 2 à 6 parties en poids, avantageusement
   3 parties en poids,
par rapport au poids total du revêtement, de billes creuses en verre et/ou de corps creux en une matière plastique ayant un diamètre moyen des particules de 10 à 150 $\mu$m et/ou de microbilles creuses en une matière plastique et/ou de corps creux en une matière plastique garnie, ainsi qu'éventuellement des adjuvants de mise en oeuvre, des agents de conservation, des pigments colorés, des colorants et/ou des épaississants.

7. Papiers peints selon la revendication 6, caractérisés en ce que la composition de revêtement contient
   1 à 3 parties en poids, avantageusement
   2 parties en poids

EP 0 492 087 B1

de fibres de bois et/ou de fibres de matière plastique.

8. Papiers peints selon les revendications 6 et 7, caractérisés en ce que la quantité pondérale de la composition de revêtement appliquée sur la bande de support continu est de 30 à 300 g/m² (poids sec).

9. Procédé de production de papiers peints ou d'application d'un revêtement sur une feuille continue ou une bande de support en papier, une feuille de matière plastique ou une nappe avec utilisation d'une composition de revêtement qui est chauffée après son application, procédé caractérisé en ce que l'on utilise une composition de revêtement qui contient ou consiste en :

a) 10 à 50 % en poids, avantageusement
20 à 30 % en poids
d'un ester d'acide acrylique ou d'un copolymère d'ester d'acide acrylique avec une proportion de comonomère inférieure à 20 % en poids, avantageusement inférieure à 10 % en poids, ou d'un copolymère de styrène/ester d'acide acrylique ayant une faible teneur en styrène ou en polystyrène,

b) 5 à 25 % en poids, avantageusement
10 à 20 % en poids
d'un copolymère de styrène/ester d'acide acrylique (ayant une plus forte teneur en styrène et/ou en polystyrène que (a))

c) jusqu'à 10 % en poids, avantageusement
jusqu'à 5 % en poids
d'eau,

d) 5 à 15 % en poids, avantageusement
6 à 10 % en poids
d'un carbonate de calcium naturel et/ou précipité,

e) 7 à 15 % en poids, avantageusement
9 à 12 % en poids
de kieselgur,

f) 5 à 15 % en poids, avantageusement
8 à 12 % en poids
d'un talc moulu ou broyé,

g) 5 à 10 % en poids, avantageusement
6 à 8 % en poids
d'un pigment à base de dioxyde de titane,

h) moins de 3 % en poids, avantageusement
moins de 1 % en poids
d'un solvant organique, avec un reste constitué par des adjuvants de mise en oeuvre, des agents de conservation, des pigments colorés, des colorants et/ou des épaississants, le poids total correspondant toujours à 100 % en poids, et,

i) 2 à 6 % en poids, avantageusement
3 % en poids,
par rapport au poids total du revêtement, de billes creuses en verre, de corps creux en verre et/ou de corps creux en une matière plastique ayant un diamètre moyen de particules de 10 à 150 μm et/ou de microbilles creuses en matière plastique et/ou de corps creux en une matière plastique garnie, en ce que la composition de revêtement est appliquée et/ou profilée avec utilisation d'un procédé de sérigraphie centrifuge ou sous rotation, d'un procédé d'impression en taille douce avec rotation, d'un procédé d'impression avec extrusion ou d'un procédé d'impression à la colle sur la bande ou la feuille continue de support; en ce que la composition de revêtement est préséchée à une température de 60 à 130°C, avantageusement 80 à 125°C, puis chauffée à une température de 130 à 220°C, avantageusement 150 à 205°C et est ensuite refroidie.

10. Utilisation de la composition de revêtement selon une ou plusieurs des revendications 1 à 5 pour la production,dans un procédé de sérigraphie avec rotation ou centrifugation ou dans un procédé d'impression en taille douce avec rotation, de papiers peints comportant un revêtement de matière plastique profilée faisant saillie en surface.

18